# EUROPEAN PATENT SPECIFICATION

(11) **EP 4 032 737 B1**
(45) Date of publication and mention of the grant of the patent: **04.10.2023**
(21) Application number: 20955472.4
(22) Date of filing: 04.11.2020
(51) Int. Cl.: B60L 3/00, B60L 15/20, B60L 50/16, B60L 50/61

(54) **HYBRID VEHICLE AND CONTROL METHOD AND SYSTEM AFTER HYBRID VEHICLE BATTERY FAILURE**
HYBRIDFAHRZEUG UND STEUERUNGSVERFAHREN UND -SYSTEM NACH AUSFALL DER HYBRIDFAHRZEUGBATTERIE
VÉHICULE HYBRIDE ET PROCÉDÉ ET SYSTÈME DE COMMANDE APRÈS UNE DÉFAILLANCE DE BATTERIE DE VÉHICULE HYBRIDE

(43) Date of publication of application: 27.07.2022
(73) Proprietor: Zhejiang Geely Holding Group Co., Ltd., Hangzhou, Zhejiang 310051 (CN); Ningbo Geely Royal Engine Components Co., Ltd., Ningbo City, Zhejiang 315336 (CN); Aurobay Technology Co., Ltd., Ningbo, Zhejiang 315800 (CN); Ningbo Umd Automatic Transmission Co., Ltd., Ningbo, Zhejiang 315830 (CN)
(72) Inventor: JING, Junchao, Hangzhou, Zhejiang 310051 (CN); LIU, Yiqiang, Hangzhou, Zhejiang 310051 (CN); HUANG, Weishan, Hangzhou, Zhejiang 310051 (CN); ZUO, Botao, Hangzhou, Zhejiang 310051 (CN); YANG, Jun, Hangzhou, Zhejiang 310051 (CN); WANG, Ruiping, Hangzhou, Zhejiang 310051 (CN); AN, Conghui, Hangzhou, Zhejiang 310051 (CN); SCHOLTEN, Ingo, Hangzhou, Zhejiang 310051 (CN)
(74) Representative: Ziebig Hengelhaupt Intellectual Property Attorneys Patentanwaltskanzlei PartGmbB
(86) International application number: PCT/CN2020/126433
(87) International publication number: WO 2022/094786

(56) References cited:
- CN-A- 102 085 813
- CN-A- 107 487 321
- CN-A- 108 819 937
- CN-A- 108 859 766
- CN-A- 108 859 766
- CN-A- 110 782 633
- CN-A- 110 877 607
- CN-A- 111 546 894
- CN-A- 111 717 029
- CN-B- 110 606 074
- US-A1- 2009 243 554
- US-A1- 2015 321 664
- US-A1- 2016 303 976
- US-A1- 2018 170 362

## Description

### FIELD OF THE INVENTION

The present invention relates to the technical field of vehicles, and particularly to a control method and a control system for a hybrid electric vehicle after a battery failure, and a hybrid electric vehicle including the control system.

### BACKGROUND OF THE INVENTION

Hybrid technology is a key technology to energy saving and emission reduction of vehicles. Based on the position of a motor relative to a conventional power system, single-motor hybrid power systems are classified as follows: a P0 configuration, a P1 configuration, a P2 configuration, a P2.5 configuration, a P3 configuration and a P4 configuration. At present, the industry mainly conducts research on the control of a hybrid power system on the basis of normal operation of a high-voltage battery (power battery), whereas rarely researches the control strategy for an abnormality of the high-voltage battery.

In the prior art, a control strategy for limp of a hybrid electric vehicle after a battery relay is disengaged in case of abnormality of the high-voltage battery is proposed. The patent application with the application number CN202010515107.5 discloses a processing measure that in case that a failure occurs in a power battery, after a battery relay is disengaged, and a clutch is closed, high-voltage pre-charge self-check is initiated to establish a high voltage; this solution relates to high-voltage pre-charge of a motor, and is complicated. However, there is currently no solution to effectively control a vehicle before the battery relay is disengaged to allow a motor to smoothly enter into voltage control after a battery failure.

Prior art document CN110877607 (A) discloses a self-generating limp system and method for a hybrid electric vehicle. The method comprises: setting electric appliance loads with the current fluctuation value larger than a set current fluctuation threshold value during opening/closing in whole vehicle loads to be R1, R2,..., Rn; when the 48V lithium battery has a fault, the lithium battery is charged, firstly, requesting an IBSG motor to enter an idle mode; then pre-charging and adjusting the idling speed of the engine are carried out; and after the voltage in the IBSG motor loop and the rotating speed of the IBSG motor meet the requirements, requesting the IBSG motor to enter a power generation mode to generate power, forbidding R1, R2,..., Rn to be switched on/off, and then converting the output voltage of the IBSG motor to charge the storage battery.

### BRIEF DESCRIPTION OF THE INVENTION

In view of the problems, the present invention is disclosed to provide a control method and a control system for overcoming the problem or at least partly solving the problem of a hybrid electric vehicle after a battery failure and a hybrid electric vehicle including the control system.

One object of the present invention is to provide a control method and system for a hybrid electric vehicle after a battery failure to conduct coordination control on a power battery, a motor, a transmission and an engine before a relay of the power battery is disengaged, to enable the motor to smoothly enter into a voltage control mode and operate stably.

A further object of the present invention is to conduct voltage control with different motor target voltages before and after the relay is disengaged, to further reduce voltage fluctuation of the motor, and enable the motor to operate stably.

A yet further object of the present invention is to take the difference between a driver request torque and an actual torque of the motor as an engine request torque, to enable the engine to meet a driver request and a low-voltage system charge request of a vehicle, so that a hybrid electric vehicle can still continuously operate like a conventional vehicle even after a battery failure, and the security and robustness of the vehicle are improved.

Particularly, according to one aspect of the embodiment of the present invention, the present invention provides a control method for a hybrid electric vehicle after a battery failure, which is as defined in claims 1 to 7.

According to another aspect of the embodiment of the present invention, the present invention further provides a control system for a hybrid electric vehicle after a battery failure, which is as defined in claims 8-12.

According to yet another aspect of the embodiment of the present invention, the present invention further provides a hybrid electric vehicle, including the control system for a hybrid electric vehicle after a battery failure of any one of the embodiments.

The control method and system for the hybrid electric vehicle after the battery failure, provided by embodiments of the present invention, after monitoring that a failure occurs in a power battery, first judge whether the failure is a specific type of failure under which a motor is capable of conducting voltage control. When the failure of the power battery is the specific type of failure, before the relay of the power battery is disengaged, the power battery, an engine, a transmission and a motor of the hybrid electric vehicle are coordinated and controlled, to enable operation states thereof to meet a preset voltage control entering condition, and then the motor is controlled to enter into the voltage control mode. In this way, the motor can enter into voltage control and operate stably, thus avoiding problems of overtemperature of a battery, serious voltage fluctuation and the like caused by direct voltage control on the motor after a power battery failure.

Further, before and after the relay is disengaged, different motor target voltages are adopted to conduct voltage control. Specifically, before the relay is disengaged, a current voltage of the motor is taken as the target voltage of the motor, and after the relay is disengaged, a preset voltage target value of the motor is taken as the target voltage. In this way, voltage fluctuation of the motor can be further reduced, and the motor can operate more stably.

Further, the difference between the driver request torque and the actual torque of the motor is taken as the engine request torque, to enable the output torque of the engine to meet the wheel driving demand and the low-voltage system charge demand of the hybrid electric vehicle, and thus after the failure occurs in the power battery, the engine is still capable of meeting the driver request and the low-voltage system charge request of the vehicle, so that the hybrid electric vehicle is still capable of continuously operating like a conventional vehicle, and the security and robustness of the vehicle are improved.

The above description is only an overview of the technical solution of the present invention. To understand more clearly the technical means of the present invention, to implement in accordance with the contents of the specification, and to make the above and other purposes, features and advantages of the present invention more apparent and understandable, specific embodiments of the present invention are described below.

According to detailed description of specific embodiments of the present invention in combination with drawings, the above and other objects, advantages and features of the present invention will be better understood by those skilled in the art.

### BRIEF DESCRIPTION OF THE DRAWINGS

Hereinafter, some specific embodiments of the present invention will be described in detail in an exemplary and non-limiting manner with reference to the drawings. Identical reference signs in the drawings indicate identical or similar components or parts. It should be understood by those skilled in the art that these drawings are not necessarily drawn to scale. In drawings:
FIG. 1 shows a structural schematic diagram of a hybrid power system of a P2.5 configuration of the prior art;
FIG. 2 shows a schematic diagram of an ISG torque output path of a P2.5 configuration hybrid power system;
FIG. 3 shows a schematic diagram of an EFAD torque output path of a P2.5 configuration hybrid power system;
FIG. 4 shows a schematic flow diagram of a control method for a hybrid electric vehicle after a battery failure according to an embodiment of the present invention;
FIG. 5 shows a schematic diagram of an energy flow direction after a motor enters into a voltage control mode according to an embodiment of the present invention;
FIG. 6 shows a schematic flow diagram of a control method for a hybrid electric vehicle after a battery failure according to another embodiment of the present invention;
FIG. 7 shows a structural schematic diagram of a control system for a hybrid electric vehicle after a battery failure according to an embodiment of the present invention; and
FIG. 8 shows a schematic diagram of change of operation states of components in the process from a battery failure occurring to conducting motor voltage control according to an embodiment of the present invention.

### DETAILED DESCRIPTION

Exemplary embodiments of the present disclosure will be described in greater detail below with reference to the drawings. Although exemplary embodiments of the present disclosure are shown in the drawings, it should be understood that the present disclosure can be implemented in various forms and should not be limited to the embodiments elaborated herein. On the contrary, these embodiments are provided to enable a more thorough understanding of the present disclosure and to enable the complete scope of the present disclosure to be communicated to those skilled in the art.

A hybrid power system currently has the following main configurations: a P2 configuration, a P2.5 configuration and a P3 configuration. The P2.5 configuration has the characteristics that a motor and a dual clutch transmission are integrated, the motor is connected to an even axis of the dual clutch transmission, the motor is positioned behind a clutch and before a gear, and a step gear is arranged between the transmission axis and the motor to increase the rotation speed of the motor. The hybrid power system of the P2.5 configuration has the advantages of simplified structure, simplified material, reduced weight, simple control, motor and clutch gearing thus reducing the load, high system efficiency, significant fuel saving effect, and the like.

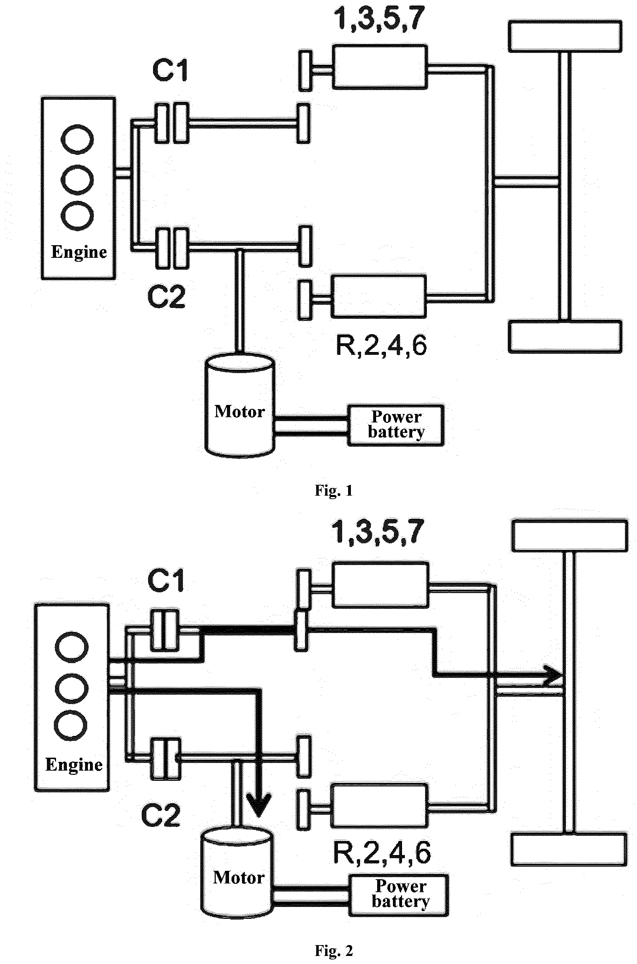

FIG. 1 shows a structural schematic diagram of a hybrid power system of a P2.5 configuration of the prior art. As shown in FIG. 1, the hybrid power system of the P2.5 configuration uses a single motor; a power battery is connected to the motor, and an engine is connected to odd axis gears of a transmission (i.e., gears 1, 3, 5, 7 in FIG. 1) through a first clutch C1, is connected to the motor through a second clutch C2, and is then connected to even axis gears of the transmission (i.e., gears R, 2, 4, 6 in FIG. 1). The hybrid power system of the P2.5 configuration has three torque output paths: a Disengaged Path, an ISG path and an EFAD path. The Disengaged Path refers to that the motor is disengaged from the engine and the even axis gears of the transmission, in a state as shown in FIG. 1. The ISG path refers to that the motor is communicated with the engine through the second clutch C2, and meanwhile, the motor is disengaged from the even axis gears of the transmission, and then the engine is communicated with the odd axis gears of the transmission through the first clutch C1, as shown in FIG. 2. In this case, a part of the torque of the engine is output to the motor, and the other part is output to a wheel through the odd axis gears of the transmission. The EFAD path refers to that the motor is directly connected to the even axis gears (gears R, 2, 4, 6) of the transmission to boost or charge, and the motor is disengaged from the engine. In this case, the torque of the motor is output to the wheel through the even axis gears of the transmission.

At present, the research on the control strategy of the hybrid power system of the P2.5 configuration in the case of abnormality of a power battery (can also be called high-voltage battery) is less in the industry. The existing technology mainly focuses on the limp control strategy after the relay of the power battery is disengaged, but a solution that a vehicle is effectively controlled before a battery relay is disengaged to enable a motor to smoothly enter into voltage control after a battery failure is not available yet.

To solve the technical problems, the present invention discloses a control method for a hybrid electric vehicle after a battery failure. The control method of the present invention is applicable to the hybrid electric vehicle with the hybrid power system of the P2.5 configuration.

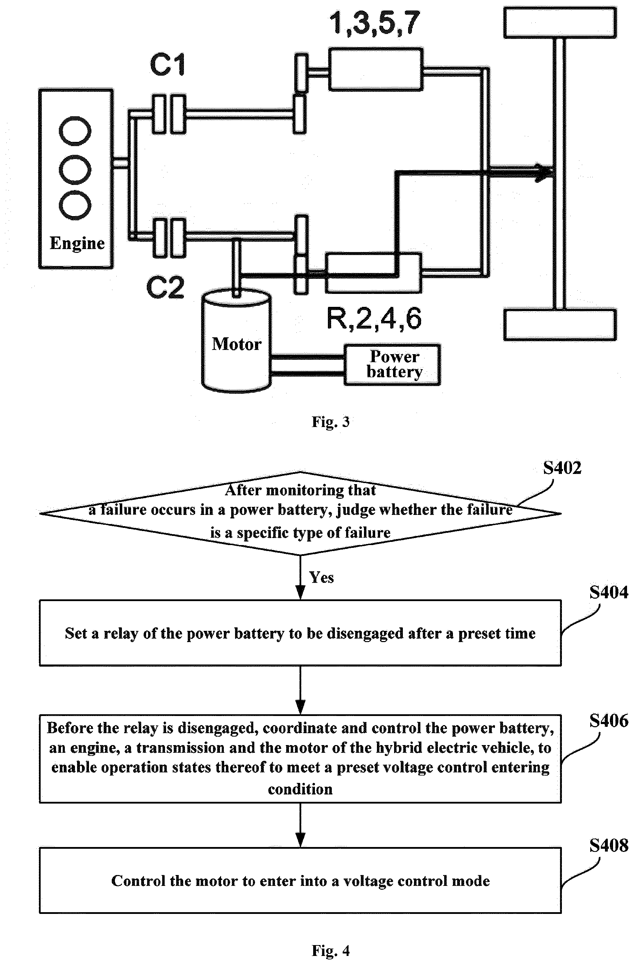

FIG. 4 shows a schematic flow diagram of a control method for a hybrid electric vehicle after a battery failure according to an embodiment of the present invention. Referring to FIG. 1, the control method for the hybrid electric vehicle after the battery failure at least includes the following steps S402 to S408.

Step S402, after monitoring that a failure occurs in a power battery, whether the failure is a specific type of failure is judged. The specific type of failure is a battery failure under which a motor of a hybrid electric vehicle is capable of conducting voltage control. If so, step S404 is performed.

Step S404, a relay of the power battery is set to be disengaged after a preset time.

Step S406, before the relay is disengaged, the power battery, an engine, a transmission and the motor of the hybrid electric vehicle are coordinated and controlled, to enable operation states thereof to meet a preset voltage control entering condition.

Step S408, the motor is controlled to enter into a voltage control mode.

The control method for the hybrid electric vehicle after the battery failure, provided by embodiments of the present invention, after monitoring that a failure occurs in a power battery, first judges whether the failure is a specific type of failure under which a motor is capable of conducting voltage control. When the failure of the power battery is the specific type of failure, before the relay of the power battery is disengaged, the power battery, an engine, a transmission and a motor of the hybrid electric vehicle are coordinated and controlled, to enable operation states thereof to meet a preset voltage control entering condition, and then the motor is controlled to enter into the voltage control mode. In this way, the motor can enter into voltage control and operate stably, thus avoiding problems of overtemperature of a battery, serious voltage fluctuation and the like caused by direct voltage control on the motor after a power battery failure.

The specific type of failure mentioned in the step S402 above can also be referred to as a Voltage of Direct Current (UDC) failure, which has the following characteristics: the UDC failure is a non-serious battery failure, under which the relay of the power battery can be disengaged after a certain time (e.g., a few seconds) after the battery failure is detected, and the motor can enter into a voltage control mode. In the step, a Battery Management System (BMS) of the hybrid electric vehicle can be used to monitor the failure of the power battery and determine the type thereof. In addition, after that the failure occurs in the power battery is monitored, a failure signal can also be sent to remind the user.

Further, to conveniently judge the type of the battery failure, power battery failures are first classified in embodiments of the present invention. Generally, power battery failures is classified into a UDC failure (i.e., the specific type of failure) and a non-UDC failure (i.e., a non-specific type of failure). The UDC failure has the features as mentioned above, specifically including slight over-heat of a battery, a mild battery insulation failure, etc. The non-UDC failure is generally a serious battery failure, under which the relay of the power battery may be directly disengaged, and the motor cannot conduct voltage control.

In actual application, a UDC failure set can be established, and the set may include failure codes, text description, etc. of various UDC failure types. After it is monitored that a failure occurs in the power battery (represented by failure codes, text description, etc.), the monitored failure is matched with the UDC failure set. If the monitored failure is matched with one failure type in the UDC failure set, it is determined that the monitored failure is a UDC failure.

By classifying the power battery failures, and judging the types of monitored power battery failures based on the classification, different power battery failures can be reasonably and effectively controlled, thereby improving the security of a vehicle.

In the step S404 above, if the occurring failure of the power battery is a specific type of failure (i.e., a UDC failure), the relay of the power battery is set to be disengaged after the preset time, and the setting is accomplished by the BMS system. The preset time may be set according to actual application demands, for example, set to 5 s.

In a normal operation state of the hybrid electric vehicle, a motor generally works in a torque control mode. However, after a UDC failure of the power battery occurs, due to the lack of the power battery as an energy buffer, if the motor continues operating in the torque control mode, a bus voltage can easily exceed a threshold value, resulting in an over-voltage failure, so the motor needs to be requested to enter into motor control. However, direct voltage control of the motor can easily lead to problems such as over-temperature of the battery, serious voltage fluctuation, etc. To enable the motor to smoothly enter into voltage control, in step S406 in embodiments of the present invention, the power battery, the engine, the transmission and the motor of the hybrid electric vehicle are coordinated and controlled, to enable operation states thereof to meet a preset voltage control entering condition, and then the motor is controlled to enter into voltage control, instead of directly enabling the motor to enter into voltage control.

The operation states of the power battery, the engine, the transmission and the motor may include a motor mode, a motor torque, a motor rotation speed, an engine state, a charge and discharge power of the power battery, etc. The step S406 specifically includes the following multiple steps:
(a) A charge and discharge peak power of the power battery is confined to a preset power limit. The preset power limit can be set according to property parameters of the power battery, for example, set to 7 kW.
(b) The engine is controlled to be in a start state. Specifically, if the engine has been started at the moment, the engine will be kept in the start state. If the engine is not started at the moment, the engine will be started.
(c) According to a driver request torque, a gear of the transmission with an expected transmission ratio is selected to be connected to the engine. The driver request torque here refers to a torque requested by a wheel of the vehicle.
(d) The motor is controlled to be communicated with the engine, the torque of the motor is controlled to a preset torque range smaller than 0 and approximate to 0, and the rotation speed of the motor is adjusted to a preset rotation speed range. The preset torque range may be set according to actual application demands, for example, set at [-7 Nm, 0 Nm]. Preferably, the torque of the motor may be controlled to/at about -5 Nm. The preset rotation speed range may be set according to actual property parameters of the motor, for example, set at 1000-5000 rpm.

The sequence of steps (a), (b), (c) and (d) above is not definite, and the steps can be interchanged in any order or performed simultaneously.

For the hybrid electric vehicle based on the hybrid power system of the P2.5 configuration, steps (c) and (d) may be specifically implemented as: first, forbidding requesting the EFAD path (i.e., forbidding connecting the motor with the wheel through the even axis gears of the transmission, requesting to connect the ISG path, i.e., closing the second clutch C2, communicating the motor with the engine, closing the first clutch C1, selecting an appropriate odd axis gear of the transmission, and connecting the engine with the wheel, to enable the engine to meet the driver request torque. Subsequently, the motor is allowed to enter into a torque mode, and the torque of the motor is unloaded to approximately 0, such as a value within -7 Nm to 0 Nm, preferably about -5 Nm. Meanwhile, the rotation speed of the motor is adjusted to a preset rotation speed range through a speed adjusting mode.

In a further embodiment, the operation state of the motor may further include a rotation speed of a cooling pump (such as a water pump) of the motor. Accordingly, the step S406 may further include the following steps: the cooling pump of the motor is controlled to operate at a maximum rotation speed. By controlling the rotation speed of the cooling pump of the motor to the maximum rotation speed, cooling measures for the motor can be ensured, and the temperature of the motor can be controlled, to prevent motor over-heating.

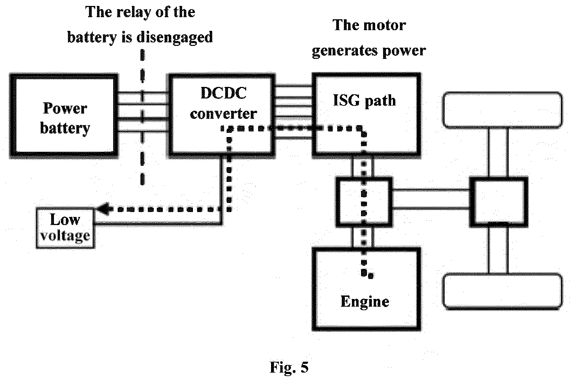

After the power battery, the engine, the transmission and the motor are coordinated and controlled to meet the preset voltage control entering condition, the step S408 is implemented to enable the motor to enter into the voltage control mode. FIG. 5 shows a schematic diagram of an energy flow direction after a motor enters into a voltage control mode according to an embodiment of the present invention; As shown in FIG. 5, the motor enters into the voltage control mode, and after the relay of the power battery is disengaged, the engine drives the motor through the ISG path to generate electric power as a generator, and the electric power generated by the motor is supplied to a low-voltage (such as 12V) electric appliance system of the vehicle through a DCDC converter, so that the hybrid electric vehicle can be continuously used after the power battery failure, and the running distance of the vehicle can be prolonged. The DCDC converter may specifically use a Combined Inverter and DC/DC converter (CIDD) module.

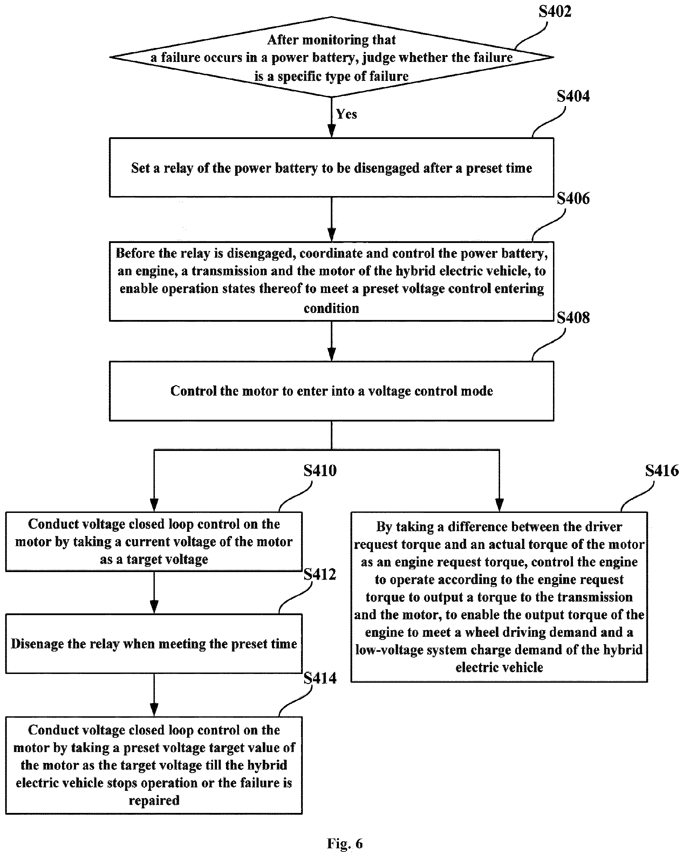

In another embodiment of the present invention, referring to FIG. 6, after the step S408, and before the relay of the power battery is disengaged, the control method may further include the following step S410: conducting voltage closed loop control on the motor by taking a current voltage of the motor (i.e., a current voltage of a high-voltage end of the motor) as a target voltage, thereby controlling the torque of the motor. Through voltage closed loop control by taking the current voltage of the motor as the target voltage before the relay is disengaged, the voltage control can be stable, with small voltage fluctuation.

In addition, to prevent the voltage of the motor from decreasing after the relay is disengaged, while the step S410 is being implemented, the engine may also be controlled to output an expected torque to the motor according to a preset charge power, to drive the motor to generate power to produce electric energy corresponding to the preset charge power. The preset charge power may be set according to actual application demands, which is not confined in the present invention. In the voltage closed loop control process of the motor before the relay is disengaged, a certain charge power is provided for the motor through the engine to drive the motor to generate power, and then the stability of the motor voltage can be further improved.

Still referring to FIG. 6, in an embodiment, after the step S410, the control method may further include the following steps S412 and S414.

Step S412, the relay is disengaged when meeting the preset time.

Step S414, voltage closed loop control is conducted on the motor by taking a preset voltage target value of the motor as a target voltage till the hybrid electric vehicle stops operating or the failure is repaired. The preset voltage target value here may be set according to a rated voltage of the power battery, for example, set at 250 V.

In actual application, the state of the relay can be monitored in real time, to judge whether the relay has been disengaged or not. If the relay is still not disengaged, return and continue implementing the step S410, and if the relay has been disengaged, implement the step S414.

Before and after the relay is disengaged, different motor target voltages are adopted to conduct voltage control. Specifically, before the relay is disengaged, a current voltage of the motor is taken as the target voltage of the motor, and after the relay is disengaged, a preset voltage target value of the motor is taken as the target voltage, which may further reduce voltage fluctuation of the motor, thus making the motor operate more stably.

In a further embodiment, while the step S414 is being implemented, voltage control on the motor may also be monitored. Specifically, while the step S414 is being implemented, a difference between the actual voltage of the motor and the preset voltage target value is monitored, and if a lasting time of the difference exceeding a preset voltage threshold exceeds a preset time threshold, the torque of the motor is reduced to 0, and the motor is controlled to exit the voltage control mode. Both the preset voltage threshold and the preset time threshold can be set according to actual application demands, for example, the preset voltage threshold can be set as 20 V, and the preset time threshold can be set as 2 s. The torque of the motor can gradually decrease (i.e., ramp) with a specific gradient to 0. When the lasting time of the difference exceeding the preset voltage threshold exceeds the preset time threshold, a failure reminding signal can be sent to remind the user. By adding a specific voltage control monitoring condition, the security of the vehicle after the power battery failure can be further improved.

Particularly, the closed loop control in the steps S410 and S414 may be proportion integration differentiation (PID) control.

Still referring to FIG. 6, in an embodiment, after the step S408, the control method may further include the following step S416: by taking a difference between the driver request torque and an actual torque of the motor as an engine request torque, controlling the engine to operate according to the engine request torque to output a torque to the transmission and the motor, to enable the output torque of the engine to meet a wheel driving demand and a low-voltage system charge demand of the hybrid electric vehicle. After the motor enters into the voltage control mode, the motor generates power under the driving of the engine. At the moment, the actual torque of the motor is a negative value, and the driver request torque may be a negative value or a positive value according to different running states of a vehicle, for example, when the vehicle slides, the driver request torque is a negative value, and when the vehicle advances normally, the driver request torque is a positive value. Therefore, by taking the difference between the driver request torque and the actual torque of the motor as an engine request torque, the actual torque of the motor can be used as an additional request compensation torque of the engine in addition to the driver request torque. By compensating the output torque of the engine according to the actual torque of the motor, after the failure occurs in the power battery, the engine is still capable of meeting the driver request and the low-voltage system power supply of the vehicle, so that the hybrid electric vehicle is still capable of keeping operating.

In actual application, in the control process in which the output torque of the engine is compensated according to the actual torque of the motor, whether the actual mode of the motor is a voltage control mode or not can also be monitored; if so, output torque compensation control of the engine is continued, and if not, compensation is stopped.

By adopting the control method of the present invention, after the failure occurs in the power battery, the hybrid electric vehicle is still capable of operating like a conventional vehicle, the motor is capable of smoothly entering into the voltage control mode and operates stably, and while a driver is reminded of battery abnormality, the voltage control mode can also be an assistant driving mode to enable the vehicle to continue operating, thereby improving the security and the robustness of the vehicle.

Based on the same technical idea, the present invention further provides a control system for a hybrid electric vehicle after a battery failure. The control system is also applicable to the hybrid electric vehicle with the hybrid power system of the P2.5 configuration.

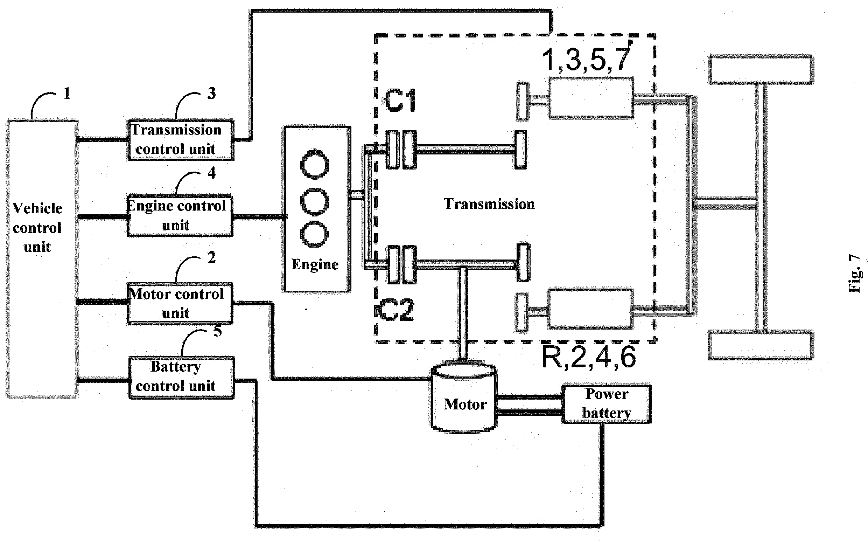

FIG. 7 shows a structural schematic diagram of a control system for a hybrid electric vehicle after a battery failure according to an embodiment of the present invention. Referring to FIG. 7, the control system at least includes: a vehicle control unit 1, a motor control unit 2, a transmission control unit 3, an engine control unit 4 and a battery control unit 5.

Functions of each component or device of the control system for the hybrid electric vehicle after the battery failure of an embodiment of the present invention and the connection relationships between the components are described.

The battery control unit 5 (which may be a BMS) is connected to a power battery, and configured to, after monitoring that a failure occurs in the power battery, judge whether the failure is a specific type of failure or not, wherein the specific type of failure is a battery failure under which a motor of the hybrid electric vehicle is capable of conducting voltage control. If the failure is the specific type of failure, the battery control unit 5 sets that a relay of the power battery is disengaged after a preset time. The preset time may be set by the battery control unit 5 and the vehicle control unit 1 according to actual application demands, for example, set to 5 s.

The motor control unit 2 may be a Microcontroller unit (MCU), which is connected to the motor. The Transmission Control Unit 3 (TCU) is connected to a transmission. The engine control unit 4 may be an Electronic Control Unit (ECU), which is connected to an engine. The Vehicle Control Unit 1 (VCU) is connected to the motor control unit 2, the transmission control unit 3, the engine control unit 4 and the battery control unit 5, respectively. The vehicle control unit 1, the motor control unit 2, the transmission control unit 3, the engine control unit 4 and the battery control unit 5 are configured to: before the relay is disengaged, coordinate and control the power battery, the engine, the transmission and the motor of the hybrid electric vehicle, to enable operation states thereof to meet a preset voltage control entering condition.

In addition, the motor control unit 2 is further configured to, after the operation states of the power battery, the engine, the transmission and the motor of the hybrid electric vehicle meet the preset voltage control entering condition, control the motor to enter into a voltage control mode.

The battery control unit 5 is further configured to: if the failure is the specific type of failure, confine a charge and discharge peak power of the power battery to a preset power limit, and send a failure signal to the vehicle control unit 1. The vehicle control unit 1 is further configured to: generate a corresponding control signal according to the failure signal and send the control signal to the motor control unit 2, the transmission control unit 3 and the engine control unit 4. The engine control unit 4 is further configured to: control the engine to be in a start state according to the control signal of the vehicle control unit 1. The transmission control unit 3 is further configured to: according to the control signal of the vehicle control unit 1 and a driver request torque, select a gear of the transmission with a required transmission ratio to be connected to the engine. The motor control unit 2 is further configured to: control the motor to be communicated with the engine according to the control signal of the vehicle control unit 1, control the torque of the motor to a preset torque range smaller than 0 and approximate to 0, and adjust the rotation speed of the motor to a preset rotation speed range.

Specifically, the vehicle control unit 1 sends an engine start request to the engine control unit 4, and the engine control unit 4 controls the engine to be in the start state according to the engine start request. The vehicle control unit 1 forbids requesting an EFAD path of the motor and requests an ISG path of the motor, and then the vehicle control unit 1 sends a torque control mode request and a torque control instruction to the motor control unit 2; the motor control unit 2 controls the motor to be communicated with the engine, and controls the torque of the motor to be in the preset torque range smaller than 0 and approximate to 0. The vehicle control unit 1 further sends a rotation speed control instruction to the motor control unit 2, and the motor control unit 2 confines the rotation speed of the motor within the preset rotation speed range according to the rotation speed control instruction. In addition, the vehicle control unit 1 sends an odd axis gear request to the transmission control unit 3, and the transmission control unit 3 selects an odd axis gear of the transmission with a required transmission ratio to be connected to the engine according to the odd axis gear request and the driver request torque.

In an embodiment, the control system may further include a cooling pump control unit (not shown in FIG. 7). The cooling pump control unit is connected to the vehicle control unit 1. The vehicle control unit 1 is further configured to: generate a corresponding control signal according to the failure signal and send the control signal to the cooling pump control unit. Accordingly, the cooling pump control unit is further configured to: control a cooling pump of the motor to operate at a maximum rotation speed according to the control signal (specifically a cooling pump rotation speed control instruction) of the vehicle control unit 1.

In an embodiment, the motor control unit 2 is further configured to: after controlling the motor to enter into the voltage control mode, and before the relay is disengaged, conduct voltage closed loop control on the motor by taking a current voltage of the motor as a target voltage.

In an embodiment, the motor control unit 2 is further configured to: in the process of conducting voltage closed loop control on the motor by taking the current voltage of the motor as the target voltage, send a power generation request to the vehicle control unit 1 according to a preset charge power. The vehicle control unit 1 is further configured to: generate an engine torque distribution signal according to the power generation request and send the engine torque distribution signal to the engine control unit 4. The engine control unit 4 is further configured to: control the engine to output a required torque to the motor according to the engine torque distribution signal, to drive the motor to generate power to produce electric energy corresponding to the preset charge power.

In an embodiment, the battery control unit 5 is further configured to: after the motor control unit 2 conducts voltage closed loop control on the motor by taking the current voltage of the motor as the target voltage, disengage the relay when meeting the preset time. In addition, the motor control unit 2 is further configured to: after the relay is disengaged by the battery control unit 5, conduct voltage closed loop control on the motor by taking a preset voltage target value of the motor as the target voltage till the hybrid electric vehicle stops operating or the failure is repaired.

In an embodiment, the motor control unit 2 is further configured to: in the process of conducting voltage closed loop control on the motor by taking the preset voltage target value of the motor as the target voltage, monitor a difference between an actual voltage of the motor and the preset voltage target value; and if the lasting time of the difference exceeding a preset voltage threshold exceeds a preset time threshold, reduce the torque of the motor to 0, and control the motor to exit the voltage control mode.

In an embodiment, the engine control unit 4 is further configured to: after the motor control unit 2 controls the motor to enter into the voltage control mode, by taking a difference between the driver request torque and an actual torque of the motor as an engine request torque, control the engine to operate according to the engine request torque to output a torque to the transmission and the motor, to enable the output torque of the engine to meet a wheel driving demand and a low-voltage system charge demand of the hybrid electric vehicle.

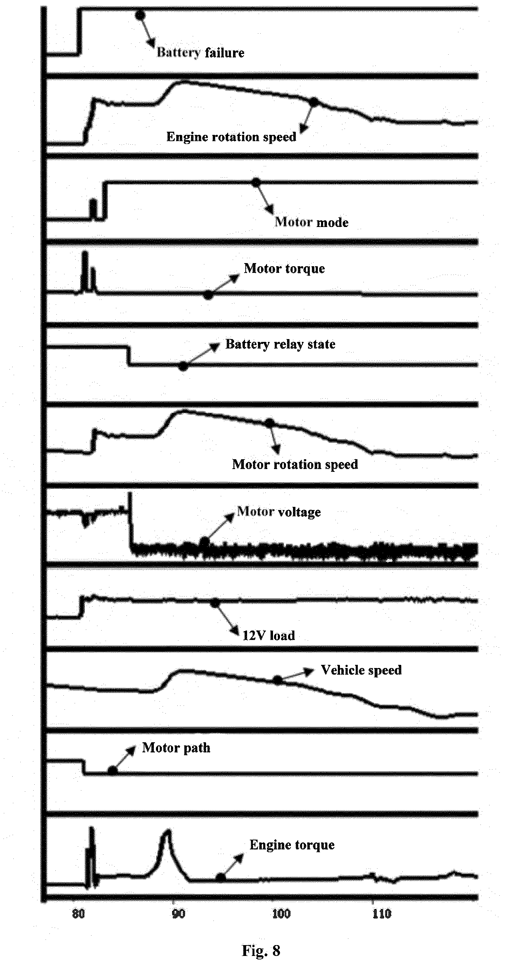

FIG. 8 shows a schematic diagram of change of operation states of components in the process from a battery failure occurring to conducting motor voltage control according to an embodiment of the present invention, and the horizontal axis in FIG. 8 represents time (in an unit of s). This embodiment is specifically a field test embodiment, and an initial vehicle test condition is that the vehicle runs in a pure electric mode. Referring to FIG. 8, at 81 s, when the vehicle speed is 20 km/h, a UDC failure happens to a battery, and a failure signal is sent to the VCU. Subsequently, the VCU receives the failure signal, and an engine start request is sent to the ECU, the engine is started through a clutch, and in the start process, a clutch start loss torque is compensated by a motor torque. At 81.5 s, the engine is successfully started. Since the motor is connected to the even axis of the transmission, an EFAD torque output path of the motor is forbidden, and at 81.7 s, the VCU sends a motor rotation speed control mode request and a motor rotation speed request to the MCU. At 81.8 s, the MCU receives a request signal, changes the motor mode into a rotation speed mode, and starts to synchronize the motor rotation speed with a target rotation speed. At 82 s, after the motor rotation speed is equal to the target rotation speed, the motor path is changed into the ISG path. At 83 s, the VCU sends a torque control mode request to the MCU to request controlling the motor torque to approximately -5 Nm. At 85 s, the VCU sends a voltage control mode request to the MCU. At 85.1 s, the MCU controls the motor to enter into voltage control, and in the voltage control, the MCU takes a current motor voltage as the target voltage, to keep the motor voltage at a current level. At 86 s, the relay of the battery is disengaged, and the voltage drop during disengagement of the relay is within a safe range. After 86 s, a high-voltage bus is separately controlled by the MCU, and is supplied with power by a single chip microcomputer, and the voltage is kept at approximately 250 V. During 86 s to 110 s, the motor rotation speed changes within 1000-3500 rpm through an accelerator, and loads of 12 V are changed by turning on and turning off an air conditioner, lights, windshield wipers, etc. The test results of the whole vehicle show that after the failure occurs in the power battery, the motor voltage is in a good safe range before the motor enters into the voltage control mode, and the 12 V voltage is stable after the motor enters into the voltage control mode, so that the whole vehicle can operate stably.

Based on the same technical idea, the present invention further provides a hybrid electric vehicle, which includes the control system for a hybrid electric vehicle after a battery failure of the forgoing any embodiment or a combination thereof.

According to any optional embodiment or a combination of multiple optional embodiments, the embodiments of the present invention can achieve the following beneficial effects:
The control method and system for the hybrid electric vehicle after the battery failure, provided by embodiments of the present invention, after monitoring that a failure occurs in a power battery, first judge whether the failure is a specific type of failure under which a motor is capable of conducting voltage control. When the failure of the power battery is the specific type of failure, before the relay of the power battery is disengaged, the power battery, an engine, a transmission and a motor of the hybrid electric vehicle are coordinated and controlled, to enable operation states thereof to meet a preset voltage control entering condition, and then the motor is controlled to enter into the voltage control mode. In this way, the motor can enter into voltage control and operate stably, thus avoiding problems of overtemperature of a battery, serious voltage fluctuation and the like caused by direct voltage control on the motor after a power battery failure.

Further, before and after the relay is disengaged, different motor target voltages are adopted to conduct voltage control. Specifically, before the relay is disengaged, a current voltage of the motor is taken as the target voltage of the motor, and after the relay is disengaged, a preset voltage target value of the motor is taken as the target voltage. In this way, voltage fluctuation of the motor can be further reduced, and the motor can operate more stably.

Further, the difference between the driver request torque and the actual torque of the motor is taken as the engine request torque, to enable the output torque of the engine to meet the wheel driving demand and the low-voltage system charge demand of the hybrid electric vehicle, and thus after the failure occurs in the power battery, the engine is still capable of meeting the driver request and the low-voltage system charge request of the vehicle, so that the hybrid electric vehicle is still capable of continuously operating like a conventional vehicle, and the security and robustness of the vehicle are improved.

So far, it should be recognized by those skilled in the art that although exemplary embodiments of the present invention have been exhaustively shown and described herein, many other variations or modifications consistent with principles of the present invention can be directly identified or deduced from the present disclosure of the present invention without departing from the scope of the claims.

## Claims

1. A control method for a hybrid electric vehicle after a battery failure, the hybrid electric vehicle comprising a motor also able to be used as a generator, a transmission (R, 2, 4, 6; 1, 3, 5, 7), an engine, a power battery and at least one clutch (C1, C2) wherein the engine is connected to the transmission via the at least one clutch, the engine is connected to the motor via the at least one clutch, the power battery is connected to the motor via a relay, and the power battery is connected to a low voltage electric appliance system of the vehicle via the relay; and the control method comprises:
after monitoring that a failure occurs in the power battery, judging whether the failure is a specific type of failure or not, wherein the specific type of failure is a battery failure under which the relay of the power battery can be disengaged after a certain time after the battery failure is detected, and the motor of the hybrid electric vehicle is capable of being used as a generator;
if so, setting the relay of the power battery to be disengaged after a preset time;
before the relay is disengaged, coordinating and controlling the power battery, the engine, the transmission and the motor of the hybrid electric vehicle, to enable operation states thereof to meet a preset voltage control mode entering condition by
controlling the engine to be in a start state, the engine being started through the at least one clutch when the vehicle runs;
according to a driver request torque, selecting a gear of the transmission with an expected transmission ratio to be connected to the engine; and
controlling a torque of the motor to a preset torque range smaller than 0 and approximate to 0, and adjusting a rotation speed of the motor to a preset rotation speed range; and
controlling the motor to enter into a voltage control mode after the relay of the power battery is set to be disengaged after the
preset time, the motor is connected with the engine through the at least one clutch to generate electric power as a generator, and the electric power generated by the motor is supplied to the low-voltage electric appliance system of the vehicle.

2. The control method according to claim 1, wherein coordinating and controlling the power battery, the engine, the transmission and the motor of the hybrid electric vehicle, to enable the operation states thereof to meet the preset voltage control entering condition is implemented further by:
controlling a cooling pump of the motor to operate at a maximum rotation speed.

3. The control method according to claim 1, wherein after controlling the motor to enter into the voltage control mode, and before the relay is disengaged, the control method further comprises:
conducting voltage closed loop control on the motor by taking a current voltage of the motor as a target voltage, wherein in the process of conducting voltage closed loop control on the motor by taking the current voltage of the motor as the target voltage, the control method further comprises:
according to a preset charge power, controlling the engine to output an expected torque to the motor, to drive the motor to generate power to produce electric energy corresponding to the preset charge power.

4. The control method according to claim 3, wherein after conducting voltage closed loop control on the motor by taking the current voltage of the motor as the target voltage, the control method further comprises:
disengaging the relay when meeting the preset time; and
conducting voltage closed loop control on the motor by taking a preset voltage target value of the motor as the target voltage till the hybrid electric vehicle stops operating or the failure is repaired.

5. The control method according to claim 4, wherein in the process of conducting voltage closed loop control on the motor by taking the preset voltage target value of the motor as the target voltage, the control method further comprises:
monitoring a difference between an actual voltage and the preset voltage target value of the motor; and
if a lasting time of the difference exceeding a preset voltage threshold exceeds a preset time threshold, reducing a torque of the motor to 0, and controlling the motor to exit the voltage control mode.

6. The control method according to any one of claims 3-5, wherein the closed loop control is a proportional-integral-derivative (PID) control.

7. The control method according to claim 1, wherein after controlling the motor to enter into the voltage control mode, the control method further comprises:
by taking a difference between the driver request torque and an actual torque of the motor as an engine request torque, controlling the engine to operate according to the engine request torque to output a torque to the transmission and the motor, to enable the output torque of the engine to meet a wheel driving demand and a low-voltage system charge demand of the hybrid electric vehicle.

8. A control system for a hybrid electric vehicle after a battery failure, comprising:
a vehicle control unit (1), a motor control unit (2), a transmission control unit (3), an engine control unit (4) and a battery control unit (5),
a motor also able to be used as a generator, a transmission (R, 2, 4, 6; 1, 3, 5, 7), an engine, a power battery and at least one clutch (C1, C2) wherein the engine is connected to the transmission via the at least one clutch, the engine is connected to the motor via the at least one clutch, the power battery is connected to the motor via a relay, and the power battery is connected to a low voltage electric appliance system of the vehicle via the relay,
wherein the battery control unit (5) is configured to:
after monitoring that a failure occurs in the power battery, judge whether the failure is a specific type of failure or not, wherein the specific type of failure is a battery failure under which the relay of the power battery can be disengaged after a certain time after the battery failure is detected, and the motor of the hybrid electric vehicle is capable of being used as a generator; and
if so, set the relay of the power battery to be disengaged after a preset time;
the vehicle control unit (1), the motor control unit (2), the transmission control unit (3), the engine control unit (4) and the battery control unit (5) are configured to:
before the relay is disengaged, coordinate and control the power battery, the engine, the transmission and the motor of the hybrid electric vehicle, to enable operation states thereof to meet a preset voltage control mode entering condition by
confining a charge and discharge peak power of the power battery to a preset power limit;
controlling the engine to be in a start state, the engine being started through the at least one clutch when the vehicle runs;
according to a driver request torque, selecting a gear of the transmission with an expected transmission ratio to be connected to the engine; and
controlling a torque of the motor to a preset torque range smaller than 0 and approximate to 0, and adjusting a rotation speed of the motor to a preset rotation speed range;
control the motor to enter into a voltage control mode after the relay of the power battery is set to be disengaged after the
preset time, the motor is connected with the engine through the at least one clutch to generate electric power as a generator, and the electric power generated by the motor is supplied to the low-voltage electric appliance system of the vehicle.

9. The control system according to claim 8, wherein the control system further comprises a cooling pump control unit;
the vehicle control unit (1) is further configured to: generate a corresponding control signal according to the failure signal and send the control signal to the cooling pump control unit; and
the cooling pump control unit is configured to: control a cooling pump of the motor to operate at a maximum rotation speed according to the control signal of the vehicle control unit.

10. The control system according to claim 8, wherein the motor control unit (2) is further configured to:
after controlling the motor to enter into the voltage control mode, and before the relay is disengaged, conduct voltage closed loop control on the motor by taking a current voltage of the motor as a target voltage, wherein the motor control unit (2) is further configured to:
in the process of conducting voltage closed loop control on the motor by taking the current voltage of the motor as the target voltage, send a power generation request to the vehicle control unit (1) according to a preset charge power;
the vehicle control unit (1) is further configured to: generate an engine torque distribution signal according to the power generation request and send the engine torque distribution signal to the engine control unit (4); and
the engine control unit (4) is further configured to: control the engine to output a required torque to the motor according to the engine torque distribution signal, to drive the motor to generate power to produce electric energy corresponding to the preset charge power.

11. The control system according to claim 10, wherein the battery control unit (5) is further configured to: after the motor control unit (2) conducts voltage closed loop control on the motor by taking the current voltage of the motor as the target voltage, and when the preset time is met, disengage the relay; and
the motor control unit (2) is further configured to: after the relay is disengaged by the battery control unit (5), conduct voltage closed loop control on the motor by taking a preset voltage target value of the motor as the target voltage till the hybrid electric vehicle stops operating or the failure is repaired, wherein the motor control unit (2) is further configured to:
in the process of conducting voltage closed loop control on the motor by taking the preset voltage target value of the motor as the target voltage, monitor a difference between an actual voltage of the motor and the preset voltage target value; and
if a lasting time of the difference exceeding a preset voltage threshold exceeds a preset time threshold, reduce a torque of the motor to 0, and control the motor to exit the voltage control mode.

12. The control system according to claim 8, wherein the engine control unit (4) is further configured to:
after the motor control unit (2) controls the motor to enter into the voltage control mode, by taking a difference between the driver request torque and an actual torque of the motor as an engine request torque, control the engine to operate according to the engine request torque to output a torque to the transmission and the motor, to enable the output torque of the engine to meet a wheel driving demand and a low-voltage system charge demand of the hybrid electric vehicle.

13. A hybrid electric vehicle, comprising the control system for a hybrid electric vehicle after a battery failure of any one of claims 8-12.

## Patentansprüche

1. Steuerverfahren für ein Hybrid-Elektrofahrzeug nach einem Batterieausfall, wobei das Hybrid-Elektrofahrzeug einen Elektromotor, der auch in der Lage ist, als Generator verwendet zu werden, ein Getriebe (R, 2, 4, 6; 1, 3, 5, 7), einen Verbrennungsmotor, eine Leistungsbatterie und mindestens eine Kupplung (C1, C2) umfasst, wobei
der Verbrennungsmotor über die mindestens eine Kupplung mit dem Getriebe verbunden ist, der Verbrennungsmotor über die mindestens eine Kupplung mit dem Elektromotor verbunden ist, die Leistungsbatterie über ein Relais mit dem Elektromotor verbunden ist und die Leistungsbatterie über das Relais mit einem Elektrogeräte-Niederspannungssystem des Fahrzeugs verbunden ist; und das Steuerverfahren umfasst:
nach dem Beobachten, dass ein Ausfall in der Leistungsbatterie auftritt, Beurteilen, ob der Ausfall ein spezifischer Ausfalltyp ist oder nicht, wobei der spezifische Ausfalltyp ein Batterieausfall ist, bei dem das Relais der Leistungsbatterie eine bestimmte Zeit nach dem Erkennen des Batterieausfalls geöffnet werden kann und der Elektromotor des Hybrid-Elektrofahrzeugs in der Lage ist, als Generator verwendet zu werden;
falls das Beurteilungsergebnis ja ist, Einstellen des Relais der Leistungsbatterie, sodass es nach einer voreingestellten Zeit geöffnet wird;
bevor das Relais geöffnet wird, Koordinieren und Steuern der Leistungsbatterie, des Verbrennungsmotors, des Getriebes und des Elektromotors des Hybrid-Elektrofahrzeugs, sodass Betriebszuständen davon ermöglicht wird, eine voreingestellte Spannungssteuerungsmodus-Einschaltbedingung zu erfüllen, durch:
Steuern des Verbrennungsmotors, sodass er sich in einen Startzustand befindet, wobei der Verbrennungsmotor bei fahrendem Fahrzeug durch die mindestens eine Kupplung gestartet wird;
Auswählen, gemäß einem vom Fahrer angeforderten Drehmoment, eines Gangs des Getriebes mit einem für die Verbindung mit dem Verbrennungsmotor erwarteten Übersetzungsverhältnis; und
Steuern eines Drehmoments des Elektromotors auf einen voreingestellten Drehmomentbereich kleiner als 0 und ungefähr 0 und Anpassen einer Drehgeschwindigkeit des Elektromotors auf einen voreingestellten Drehgeschwindigkeitsbereich; und
Steuern des Elektromotors, sodass er in einen Spannungssteuerungsmodus eintritt nachdem das Relais der Leistungsbatterie eingestellt wird, sodass es nach der voreingestellten Zeit geöffnet wird, der Elektromotor über die mindestens eine Kupplung mit dem Verbrennungsmotor verbunden wird, um elektrische Leistung als Generator zu erzeugen, und die vom Elektromotor erzeugte elektrische Leistung dem Elektrogeräte-Niederspannungssystem des Fahrzeugs zugeführt wird.

2. Steuerverfahren nach Anspruch 1, wobei das Koordinieren und Steuern der Leistungsbatterie, des Verbrennungsmotors, des Getriebes und des Elektromotors des Hybrid-Elektrofahrzeugs, um den Betriebszuständen davon zu ermöglichen, die voreingestellte Spannungssteuerungs-Einschaltbedingung zu erfüllen, ferner implementiert ist durch:
Steuern einer Kühlpumpe des Elektromotors, sodass sie bei einer maximalen Drehgeschwindigkeit betrieben wird.

3. Steuerverfahren nach Anspruch 1, wobei das Steuerverfahren nach dem Steuern des Elektromotors, sodass er in den Spannungssteuerungsmodus eintritt, und bevor das Relais geöffnet wird, ferner umfasst:
Regeln einer Spannung am Elektromotor unter Verwendung einer aktuellen Spannung des Elektromotors als Zielspannung, wobei das Steuerverfahren bei dem Regeln der Spannung am Elektromotor unter Verwendung der aktuellen Spannung des Elektromotors als Zielspannung ferner umfasst:
gemäß einer voreingestellten Aufladeleistung, Steuern des Verbrennungsmotors, sodass er ein erwartetes Drehmoment an den Elektromotor ausgibt, um den Elektromotor zur Leistungserzeugung anzutreiben, um elektrische Energie entsprechend der voreingestellten Aufladeleistung zu erzeugen.

4. Steuerverfahren nach Anspruch 3, wobei das Steuerverfahren nach dem Regeln der Spannung am Elektromotor unter Verwendung der aktuellen Spannung des Elektromotors als Zielspannung ferner umfasst:
Öffnen des Relais, wenn die voreingestellte Zeit erreicht ist; und
Regeln einer Spannung am Elektromotor unter Verwendung eines voreingestellten Spannungszielwerts des Elektromotors als Zielspannung, bis das Hybrid-Elektrofahrzeug den Betrieb einstellt oder der Ausfall repariert ist.

5. Steuerverfahren nach Anspruch 4, wobei das Steuerverfahren bei dem Regeln der Spannung am Elektromotor unter Verwendung des voreingestellten Spannungszielwerts des Elektromotors als Zielspannung ferner umfasst:
Beobachten eines Unterschieds zwischen einer tatsächlichen Spannung und dem voreingestellten Spannungszielwert des Elektromotors; und,
wenn die Zeitdauer, während der der Unterschied einen voreingestellten Spannungsschwellenwert überschreitet, einen voreingestellten Zeitdauer-Schwellenwert überschreitet, Reduzieren eines Drehmoments des Elektromotors auf 0 und Steuern des Elektromotors, sodass er den Spannungssteuerungsmodus verlässt.

6. Steuerverfahren nach einem der Ansprüche 3 bis 5, wobei das Regeln eine Proportional-integral-derivativ-Regelung (PID-Regelung) ist.

7. Steuerverfahren nach Anspruch 1, wobei das Steuerverfahren nach dem Steuern des Elektromotors, sodass er in den Spannungssteuerungsmodus eintritt, ferner umfasst:
unter Verwendung eines Unterschieds zwischen dem vom Fahrer angeforderten Drehmoment und dem tatsächlichen Drehmoment des Elektromotors als angefordertes Verbrennungsmotordrehmoment, Steuern des Verbrennungsmotors, sodass er gemäß dem angeforderten Verbrennungsmotordrehmoment betrieben wird, um ein Drehmoment an das Getriebe und den Elektromotor auszugeben, damit das Ausgangsdrehmoment des Verbrennungsmotors einen Antriebsbedarf der Räder und einen Aufladebedarf des Niederspannungssystems des Hybrid-Elektrofahrzeugs befriedigt.

8. Steuerungssystem für ein Hybrid-Elektrofahrzeug nach einem Batterieausfall, umfassend:
eine Fahrzeugsteuereinheit (1), eine Elektromotorsteuereinheit (2), eine Getriebesteuereinheit (3), eine Verbrennungsmotorsteuereinheit (4) und eine Batteriesteuereinheit (5),
einen Elektromotor, der auch in der Lage ist, als Generator verwendet zu werden, ein Getriebe (R, 2, 4, 6; 1, 3, 5, 7), einen Verbrennungsmotor, eine Leistungsbatterie und mindestens eine Kupplung (C1, C2), wobei der Verbrennungsmotor über die mindestens eine Kupplung mit dem Getriebe verbunden ist, der Verbrennungsmotor über die mindestens eine Kupplung mit dem Elektromotor verbunden ist, die Leistungsbatterie über ein Relais mit dem Elektromotor verbunden ist und die Leistungsbatterie über das Relais mit einem Elektrogeräte-Niederspannungssystem des Fahrzeugs verbunden ist,
wobei die Batteriesteuereinheit (5) dazu eingerichtet ist:
nach einem Beobachten, dass ein Ausfall in der Leistungsbatterie auftritt, zu beurteilen, ob der Ausfall ein spezifischer Ausfalltyp ist oder nicht, wobei der spezifische Ausfalltyp ein Batterieausfall ist, bei dem das Relais der Leistungsbatterie eine bestimmte Zeit nach dem Erkennen des Batterieausfalls geöffnet werden kann und der Elektromotor des Hybrid-Elektrofahrzeugs als Generator verwendet werden kann; und,
falls das Beurteilungsergebnis ja ist, das Relais der Leistungsbatterie so einzustellen, dass es nach einer voreingestellten Zeit geöffnet wird;
wobei die Fahrzeugsteuereinheit (1), die Elektromotorsteuereinheit (2), die Getriebesteuereinheit (3), die Verbrennungsmotorsteuereinheit (4) und die Batteriesteuereinheit (5) dazu eingerichtet sind:
bevor das Relais geöffnet wird, die Leistungsbatterie, den Verbrennungsmotor, das Getriebe und den Elektromotor des Hybrid-Elektrofahrzeugs zu koordinieren und zu steuern, sodass Betriebszuständen davon ermöglicht wird, eine voreingestellte Spannungssteuerungsmodus-Einschaltbedingung zu erfüllen, durch:
Beschränken einer Spitzenleistung bei Aufladung und Entladung der Leistungsbatterie auf eine voreingestellte Leistungsgrenze;
Steuern des Verbrennungsmotors, sodass er sich in einem Startzustand befindet, wobei der Verbrennungsmotor bei fahrendem Fahrzeug durch die mindestens eine Kupplung gestartet wird;
Auswählen, gemäß einem vom Fahrer angeforderten Drehmoment, eines Gangs des Getriebes mit einem für die Verbindung mit dem Verbrennungsmotor erwarteten Übersetzungsverhältnis; und
Steuern eines Drehmoments des Elektromotors auf einen voreingestellten Drehmomentbereich kleiner als 0 und ungefähr 0 und Anpassen einer Drehgeschwindigkeit des Elektromotors auf einen voreingestellten Drehgeschwindigkeitsbereich;
Steuern des Elektromotors, sodass er in einen Spannungssteuerungsmodus eintritt nachdem das Relais der Leistungsbatterie eingestellt wird, sodass es nach der voreingestellten Zeit geöffnet wird, der Elektromotor über die mindestens eine Kupplung mit dem Verbrennungsmotor verbunden wird, um elektrische Leistung als Generator zu erzeugen, und die vom Elektromotor erzeugte elektrische Leistung dem Elektrogeräte-Niederspannungssystem des Fahrzeugs zugeführt wird.

9. Steuerungssystem nach Anspruch 8, wobei das Steuerungssystem ferner eine Kühlpumpe-Steuereinheit umfasst;
die Fahrzeugsteuereinheit (1) ferner dazu eingerichtet ist: gemäß dem Ausfall-Signal ein entsprechendes Steuersignal zu erzeugen und das Steuersignal an die Kühlpumpe-Steuereinheit zu senden; und
die Kühlpumpe-Steuereinheit dazu eingerichtet ist: gemäß dem Steuersignal der Fahrzeugsteuereinheit eine Kühlpumpe des Elektromotors mit maximaler Drehgeschwindigkeit zu betreiben.

10. Steuerungssystem nach Anspruch 8, wobei die Elektromotorsteuereinheit (2) ferner dazu eingerichtet ist:
nach dem Steuern des Elektromotors, sodass er in den Spannungssteuerungsmodus eintritt, und bevor das Relais geöffnet wird, eine Spannung am Elektromotor unter Verwendung der aktuellen Spannung des Elektromotors als Zielspannung zu regeln, wobei die Elektromotorsteuereinheit (2) ferner dazu eingerichtet ist:
bei dem Regeln der Spannung am Elektromotor unter Verwendung der aktuellen Spannung des Elektromotors als Zielspannung gemäß einer voreingestellten Aufladeleistung eine Anforderung zur Leistungserzeugung an die Fahrzeugsteuereinheit (1) zu senden;
wobei die Fahrzeugsteuereinheit (1) ferner dazu eingerichtet ist: gemäß der Anforderung zur Leistungserzeugung ein Signal zur Verteilung des Verbrennungsmotordrehmoments zu erzeugen und das Signal zur Verteilung des Verbrennungsmotordrehmoments an die Verbrennungsmotorsteuereinheit (4) zu senden; und
die Verbrennungsmotorsteuereinheit (4) ferner dazu eingerichtet ist: gemäß dem Signal zur Verteilung des Verbrennungsmotordrehmoments den Verbrennungsmotor zu steuern, sodass er ein erforderliches Drehmoment an den Elektromotor ausgibt, um den Elektromotor zur Leistungserzeugung anzutreiben, um elektrische Energie entsprechend der voreingestellten Aufladeleistung zu erzeugen.

11. Steuerungssystem nach Anspruch 10, wobei die Batteriesteuereinheit (5) ferner dazu eingerichtet ist: nachdem die Elektromotorsteuereinheit (2) die Spannung am Elektromotor unter Verwendung der aktuellen Spannung des Elektromotors als Zielspannung regelt und wenn die voreingestellte Zeit erreicht ist, das Relais zu öffnen; und
die Elektromotorsteuereinheit (2) ferner dazu eingerichtet ist: nach dem Öffnen des Relais durch die Batteriesteuereinheit (5) eine Spannung am Elektromotor unter Verwendung eines voreingestellten Spannungszielwerts des Elektromotors als Zielspannung zu regeln, bis das Hybrid-Elektrofahrzeug den Betrieb einstellt oder der Ausfall repariert ist, wobei die Elektromotorsteuereinheit (2) ferner dazu eingerichtet ist:
bei dem Regeln der Spannung am Elektromotor unter Verwendung des voreingestellten Spannungszielwerts des Elektromotors als Zielspannung einen Unterschied zwischen einer tatsächlichen Spannung des Elektromotors und dem voreingestellten Spannungszielwert zu beobachten; und,
wenn die Zeitdauer, während der der Unterschied einen voreingestellten Spannungsschwellenwert überschreitet, einen voreingestellten Zeitdauer-Schwellenwert überschreitet, das Drehmoment des Elektromotors auf 0 zu reduzieren und den Elektromotor so zu steuern, dass er den Spannungssteuerungsmodus verlässt.

12. Steuerungssystem nach Anspruch 8, wobei die Verbrennungsmotorsteuereinheit (4) ferner dazu eingerichtet ist:
nachdem die Elektromotorsteuereinheit (2) den Elektromotor so steuert, dass er in den Spannungssteuerungsmodus eintritt, unter Verwendung eines Unterschieds zwischen dem vom Fahrer angeforderten Drehmoment und dem tatsächlichen Drehmoment des Elektromotors als angefordertes Verbrennungsmotordrehmoment, den Verbrennungsmotor so zu steuern, dass er entsprechend dem angeforderten Verbrennungsmotordrehmoment betrieben wird, um ein Drehmoment an das Getriebe und den Elektromotor auszugeben, damit das Ausgangsdrehmoment des Verbrennungsmotors einen Antriebsbedarf der Räder und einen Aufladebedarf des Niederspannungssystems des Hybrid-Elektrofahrzeugs befriedigt.

13. Hybrid-Elektrofahrzeug mit dem Steuerungssystem für ein Hybrid-Elektrofahrzeug nach einem Batterieausfall nach einem der Ansprüche 8 bis 12.

## Revendications

1. Un procédé de commande pour un véhicule électrique hybride après une défaillance de batterie, le véhicule électrique hybride comprenant un moteur pouvant également être utilisé comme générateur, une transmission (R, 2, 4, 6; 1, 3, 5, 7), un moteur, une batterie d'alimentation et au moins un embrayage (Cl, C2) dans lequel le moteur est relié à
la transmission via au moins un embrayage, le moteur étant relié au moteur via au moins un embrayage, la batterie d'alimentation est reliée au moteur via un relais, et la batterie d'alimentation est reliée à un système d'appareil électrique basse tension du véhicule via le relais; et le procédé de commande comprend:
après avoir diagnostiqué une défaillance présente dans la batterie d'alimentation, évaluer si la défaillance représente un type spécifique de défaillance ou non, dans lequel le type spécifique de défaillance est une défaillance de batterie suite à laquelle le relais de la batterie d'alimentation peut être débrayé après un certain temps suite à la détection de la défaillance de batterie, et le moteur du véhicule électrique hybride peut être utilisé comme générateur;
si c'est le cas, paramétrer le relais de la batterie d'alimentation afin qu'il soit désengagé après un temps prédéfini;
avant le débrayage du relais, coordonner et contrôler la batterie d'alimentation, le moteur, la transmission et le moteur du véhicule électrique hybride, de manière que leurs états de fonctionnement passent en mode de commande de tension prédéfini en remplissant les conditions par :
commander le moteur de manière que celui-ci soit en état de démarrage, le moteur étant démarré par l'intermédiaire d'au moins un embrayage lorsque le véhicule tourne;
en fonction du couple requis par le conducteur, choisir une gamme de vitesses de la boîte de vitesses avec un rapport de transmission prévu à être relié au moteur; et
commander un couple du moteur en fonction d'une plage de couple prédéfinie inférieure à 0 et s'approchant de 0, et ajuster une vitesse de rotation du moteur en fonction d'une plage de vitesses de rotation prédéfinie; et
commander le moteur de manière que celui-ci passe en mode de commande de tension après que le relais de la batterie d'alimentation soit paramétré pour être débrayé après le temps préréglé, le moteur est relié au moteur par l'intermédiaire d'au moins un embrayage pour générer de l'énergie électrique en tant que générateur, et l'énergie électrique générée par le moteur est fournie au système d'appareil électrique basse tension du véhicule.

2. Le procédé de commande selon la revendication 1, dans lequel la coordination et la commande de la batterie d'alimentation, le moteur, la transmission et le moteur du véhicule électrique hybride, permettant le passage de leurs états de fonctionnement en mode de commande de tension prédéfini est en outre mise en oeuvre par:
commander une pompe de refroidissement du moteur de manière que celle-ci fonctionne à une vitesse de rotation maximale.

3. Le procédé de commande selon la revendication 1, dans lequel après la commande du moteur de manière que celui-ci entre en mode de commande de tension, et avant que le relais ne soit débrayé, le procédé de commande comprend en outre :
effectuer une commande de tension en boucle fermée au niveau du moteur en prenant une tension actuelle du moteur en tant que tension cible, dans lequel lors du processus de commande de tension en boucle fermée au niveau du moteur en prenant la tension actuelle du moteur en tant que tension cible, le procédé de commande comprend en outre :
selon une puissance de charge prédéfinie, commander le moteur de manière que celui-ci produise un couple attendu au niveau du moteur, en entraînant le moteur afin qu'il génère de l'énergie pour l'alimentation en énergie électrique correspondant à la puissance de charge prédéfinie.

4. Le procédé de commande selon la revendication 3, dans lequel après avoir effectué une commande de tension en boucle fermée au niveau du moteur en prenant la tension actuelle du moteur en tant que tension cible, le procédé de commande comprend en outre :
désengager le relais une fois l'heure souhaitée atteinte; et
effectuer une commande de tension en boucle fermée au niveau du moteur en prenant une valeur cible de tension prédéfinie du moteur comme tension cible jusqu'à ce que le véhicule électrique hybride cesse de fonctionner ou que la défaillance soit réparée.

5. Le procédé de commande selon la revendication 4, dans lequel lors du processus de commande de tension en boucle fermée au niveau du moteur en prenant la valeur cible de tension prédéfinie du moteur comme tension cible, le procédé de commande comprend en outre:
détecter une différence entre une tension réelle et la valeur cible de tension prédéfinie du moteur; et
si une durée de la différence dépassant un seuil de tension prédéfini dépasse un seuil de temps prédéfini, réduire un couple du moteur à 0, et commander le moteur de manière que celui-ci quitte le mode de commande de tension.

6. Le procédé de commande selon l'une quelconque des revendications 3-5, dans lequel la commande en boucle fermée est une commande proportionnelle-intégrale-dérivée (PTD).

7. Le procédé de commande selon la revendication 1, dans lequel, après avoir commandé le moteur de manière que celui-ci passe en mode de commande de tension, le procédé de commande comprend en outre :
détecter une différence entre le couple requis par le conducteur et un couple réel du moteur comme couple requis du moteur, commander le moteur de manière que celui-ci fonctionne en conformité avec le couple requis par le moteur pour produire un couple à la transmission et au moteur, ainsi le couple de sortie du moteur peut répondre à une demande d'entraînement de roue et une demande de système de charge basse tension du véhicule électrique hybride.

8. Un système de commande pour un véhicule électrique hybride après une défaillance de batterie, comprenant:
une unité de commande de véhicule (1), une unité de commande moteur (2), une unité de commande de transmission (3), une unité de commande moteur (4) et une unité de commande de batterie (5),
un moteur pouvant également être utilisé comme générateur, une transmission (R, 2, 4, 6; 1, 3, 5, 7), un moteur, une batterie d'alimentation et au moins un embrayage (Cl, C2) dans lequel le moteur est relié à la transmission via au moins un embrayage, le moteur est relié au moteur via au moins un embrayage, la batterie d'alimentation est reliée au moteur via un relais, et la batterie d'alimentation est reliée à un système d'appareil électrique basse tension du véhicule via le relais,
dans lequel l'unité de commande de batterie (5) est configurée pour :
après avoir diagnostiqué une défaillance présente dans la batterie d'alimentation, évaluer si la défaillance représente un type spécifique de défaillance ou non, dans lequel le type spécifique de défaillance est une défaillance de batterie suite à laquelle le relais de la batterie d'alimentation peut être débrayé après un certain temps suite à la détection de la défaillance de la batterie, et le moteur du véhicule électrique hybride peut être utilisé comme générateur; et
si c'est le cas, paramétrer le débrayage du relais de la batterie d'alimentation après un temps prédéfini
l'unité de commande du véhicule (1), l'unité de commande moteur (2), l'unité de commande de transmission (3), l'unité de commande moteur (4) et l'unité de commande de la batterie (5) sont configurées pour:
avant que le relais ne soit désengagé, coordonner et commander la batterie d'alimentation, le moteur, la transmission et le moteur du véhicule électrique hybride, de manière que leurs états de fonctionnement puissent correspondre au mode de commande de tension prédéfini en répondant aux conditions suivantes: ·
limiter la puissance maximale de charge et de décharge de la batterie à une limite de puissance prédéfinie;
commander le moteur de manière qu'il soit en état de démarrage, le moteur étant démarré par l'intermédiaire d'au moins un embrayage lorsque le véhicule tourne;
en fonction du couple requis par le conducteur, choisir une gamme de vitesses de la boîte de vitesses avec un rapport de transmission prévu à être relié au moteur; et
commander un couple du moteur en fonction d'une plage de couple prédéfinie inférieure à 0 et s'approchant de 0, et ajuster une vitesse de rotation du moteur en fonction d'une plage de vitesses de rotation prédéfinie;
commander le moteur de manière que celui-ci passe en mode de commande de tension après le débrayage du relais de la batterie d'alimentation après le temps préréglé, le moteur est relié au moteur via au moins un embrayage pour générer de l'énergie électrique en tant que générateur, et la puissance électrique générée par le moteur est fournie au système d'appareil électrique basse tension du véhicule.

9. Le système de commande selon la revendication 8, dans lequel le système de commande comprend en outre une unité de commande de pompe de refroidissement ;
l'unité de commande du véhicule (1) est en outre configurée pour : générer un signal de commande correspondant en fonction du signal de défaillance et envoyer le signal de commande à l'unité de commande de pompe de refroidissement; et
l'unité de commande de pompe de refroidissement est configurée pour: commander une pompe de refroidissement du moteur de manière que celle-ci fonctionne à une vitesse de rotation maximale en fonction du signal de commande de l'unité de commande du véhicule.

10. Le système de commande selon la revendication 8, dans lequel l'unité de commande moteur (2) est en outre configuré pour :
après avoir commandé le moteur de manière que celui-ci entre en mode de commande de tension, et avant que le relais ne soit débrayé, effectuer une commande de tension en boucle fermée au niveau du moteur en prenant une tension réelle du moteur comme tension cible, dans lequel l'unité de commande moteur (2) est en outre configurée pour:
lors processus de commande de tension en boucle fermée au niveau du moteur en prenant la tension réelle du moteur comme tension cible, envoyer une demande de génération d'énergie à l'unité de commande du véhicule (1) selon une puissance de charge prédéfinie;
l'unité de commande du véhicule (1) est en outre configurée pour: générer un signal de répartition du couple moteur conformément à la demande de génération d'énergie et envoyer le signal de répartition du couple moteur à l'unité de commande moteur (4); et
l'unité de commande moteur (4) est en outre configurée pour : commander le moteur de manière que celui-ci produise un couple requis au moteur en fonction du signal de répartition du couple moteur, en entraînant le moteur afin qu'il génère de l'énergie pour l'alimentation en énergie électrique correspondant à la puissance de charge prédéfinie.

11. Le système de commande selon la revendication 10, dans lequel l'unité de commande de batterie (5) est en outre configurée pour : après que l'unité de commande moteur (2) ait effectué la commande de tension en boucle fermée au niveau du moteur en prenant la tension réelle du moteur comme tension cible, et lorsque le temps préréglé est respecté, désengager le relais; et
l'unité de commande moteur (2) est en outre configurée pour: après le débrayage du relais par l'unité de commande de batterie (5), effectuer une commande de tension en boucle fermée au niveau du moteur en prenant une valeur cible de tension prédéfinie du moteur comme tension cible jusqu'à ce que le véhicule électrique hybride cesse de fonctionner ou que la défaillance soit réparée, dans lequel l'unité de commande moteur (2) est en outre configurée pour:
lors du processus de commande de tension en boucle fermée au niveau du moteur en prenant la valeur cible de tension prédéfinie du moteur comme la tension cible, déterminer une différence entre une tension réelle du moteur et la valeur cible de tension prédéfinie; et
si une durée de la différence dépassant un seuil de tension prédéfini dépasse un seuil de temps prédéfini, réduire le couple du moteur à 0 et commander le moteur de manière que celui-ci quitte le mode de commande de tension.

12. Le système de commande selon la revendication 8, dans lequel l'unité de commande moteur (4) est en outre configurée pour :
après que l'unité de commande moteur (2) commande le moteur de manière que celui-ci passe en mode de commande de tension, en prenant une différence entre le couple requis par le conducteur et un couple réel du moteur comme une demande de couple moteur, commander le moteur de manière que celui-ci fonctionne en conformité avec le couple du moteur requis en produisant un couple à la transmission et au moteur, ainsi le couple de sortie du moteur peut répondre à une demande d'entraînement de roue et une demande de charge de système basse tension du véhicule électrique hybride.

13. Un véhicule électrique hybride, comprenant le système de commande d'un véhicule électrique hybride après une défaillance de batterie selon l'une quelconque des revendications 8-12.
